(19) **Europäisches Patentamt / European Patent Office / Office européen des brevets**

(11) **EP 4 571 635 B1**

(12) **EUROPEAN PATENT SPECIFICATION**

(45) Date of publication and mention of the grant of the patent:
**08.07.2026 Bulletin 2026/28**

(21) Application number: **24219510.5**

(22) Date of filing: **12.12.2024**

(51) International Patent Classification (IPC):
**G06T 5/60** *(2024.01)*     **G06N 3/045** *(2023.01)*
**G06T 5/77** *(2024.01)*

(52) Cooperative Patent Classification (CPC):
**G06T 5/77; G06N 3/045; G06N 3/047; G06N 3/088; G06T 5/60;** G06T 2207/20081; G06T 2207/20084; G06T 2207/20104

(54) **CONDITIONAL IMAGE GENERATION**

BEDINGTE BILDERZEUGUNG

GÉNÉRATION D'IMAGE CONDITIONNELLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2023 AU 2023282318**
**15.12.2023 AU 2023282319**
**15.12.2023 AU 2023282320**

(43) Date of publication of application:
**18.06.2025 Bulletin 2025/25**

(73) Proprietor: **Canva Pty Ltd.**
**Sydney, New South Wales 2010 (AU)**

(72) Inventors:
• **Joshi, Bhautik**
**Sydney, 2010 (AU)**
• **Halupka, Kerry**
**Sydney, 2010 (AU)**

(74) Representative: **Chettle, John Edward et al**
**Venner Shipley LLP**
**TIDE Bankside**
**8 Emerson Street**
**London SE1 9DU (GB)**

(56) References cited:
• **TAO LIU ET AL: "DiffDub: Person-generic Visual Dubbing Using Inpainting Renderer with Diffusion Auto-encoder", ARXIV.ORG, CORNELL UNIVERSITY LIBRARY, 201 OLIN LIBRARY CORNELL UNIVERSITY ITHACA, NY 14853, 3 November 2023 (2023-11-03), XP091651439**

• **XIE SHAOAN ET AL: "SmartBrush: Text and Shape Guided Object Inpainting with Diffusion Model", 2023 IEEE/CVF CONFERENCE ON COMPUTER VISION AND PATTERN RECOGNITION (CVPR), IEEE, 17 June 2023 (2023-06-17), pages 22428 - 22437, XP034402175, DOI: 10.1109/CVPR52729.2023.02148**

• **TIANHAO WU ET AL: "IPO-LDM: Depth-aided 360-degree Indoor RGB Panorama Outpainting via Latent Diffusion Model", ARXIV.ORG, CORNELL UNIVERSITY LIBRARY, 201 OLIN LIBRARY CORNELL UNIVERSITY ITHACA, NY 14853, 6 July 2023 (2023-07-06), XP091556980**

• **CAN QIN ET AL: "UniControl: A Unified Diffusion Model for Controllable Visual Generation In the Wild", ARXIV.ORG, CORNELL UNIVERSITY LIBRARY, 201 OLIN LIBRARY CORNELL UNIVERSITY ITHACA, NY 14853, 2 November 2023 (2023-11-02), XP091650691**

• **AVRAHAMI OMRI ET AL: "Blended Latent Diffusion", ACM TRANSACTIONS ON GRAPHICS, ACM, NY, US, vol. 42, no. 4, 1 August 2023 (2023-08-01), pages 1 - 11, XP059330270, ISSN: 0730-0301, DOI: 10.1145/3592450**

• **SUMITH KULAL ET AL: "Putting People in Their Place: Affordance-Aware Human Insertion into Scenes", ARXIV.ORG, CORNELL UNIVERSITY LIBRARY, 201 OLIN LIBRARY CORNELL UNIVERSITY ITHACA, NY 14853, 27 April 2023 (2023-04-27), XP091496058**

EP 4 571 635 B1

# EP 4 571 635 B1

## Description

### Field of the disclosure

The present disclosure relates to the field of image generation. Particular embodiments relate to methods of generation of digital images through the application of a diffusion model. Other embodiments relate to a computer processing system or computer-readable storage configured to perform such methods.

### Background

Recently there has been substantial interest and development of automated image generation, in particular using machine-learning models such as diffusion machine-learning models. An example image generation tool is Stable Diffusion, a latent text-to-image diffusion model that generates images, which may be photo-realistic, given a text input.

In addition to generating images from text, diffusion ML models may also be used for inpainting, or replacing a portion of an existing image with other image content based on a text prompt, and for outpainting, or extending or generating a background to an existing image based on a text prompt. Results can be variable and in some cases obtaining an acceptable image with inpainting or outpainting can be time consuming or require relative familiarity or experience with how to generate an acceptable result.

The present disclosure relates to methods for applying machine learning based solutions to image generation, for example to allow for image enhancement through inpainting or outpainting.

"DIFFDUB: Person-generic visual dubbing using inpainting renderer with diffusion auto-encoder", by Tao Liu et al., presents an inpainting renderer responsible for inpainting rendering and latent semantic representation learning. "SmartBrush: Text and Shape Guided Object Inpainting with Diffusion Model", by Shaoan Xie et al., presents a diffusion-based model for completing a missing region with an object using both text and shape-guidance. "IPO-LDM: Depth-aided 360-degree Indoor RGB Panorama Outpainting via Latent Diffusion Model", by Tianhao Wu et al., presents a bimodal latent diffusion structure that utilizes both RGB and depth panoramic data during training. "UniControl: A Unified Diffusion Model for Controllable Visual Generation In the Wild", by Can Qin et al., presents a generative foundation model that consolidates an array of controllable condition-to-image (C2I) tasks within a singular framework.

### Summary of the disclosure

The invention is defined by the claims. Computer implemented methods for generating an image are described. In some embodiments the methods are applied to outpainting of an image. In some embodiments the methods are applied to inpainting of an image. A computer may be configured to perform one or both of the outpainting and inpainting.

Claim 1 discloses a method for generating an image according to the invention.

In some embodiments applying noise to the condition image includes: generating a noise image, wherein the noise image has the same dimensions as the condition image, and replacing a portion of the condition image with the noise image, at least across the first portion.

According to the invention the latent diffusion model includes a neural network to control the latent diffusion model, the neural network structure estimating depth information based on a mask that identifies said first portion as foreground. The first portion may be an area for outpainting of the input or source image and the method may further include overlaying the input or source image over the generated image using the latent diffusion model.

A computer implemented method for creating an outpainted image based on an input image includes: creating a mask for a canvas, the mask defining a first portion of the canvas for image generation and a second portion of the canvas corresponding to the input image, wherein the canvas is larger than the input image so that the input image can be placed on the canvas leaving space in at least on direction; generating a condition image from the source image and the mask using a first generative model, wherein the first generative model extends the source image across the first portion of the canvas; generating a latent image from the condition image, wherein generating the latent image includes applying noise to the condition image at least across the first portion; generating an image across the first portion of the canvas using a second generative model, wherein the second generative model is a latent diffusion model with a latent diffusion pipeline and the latent image is passed to the latent diffusion pipeline as an argument to inference; and creating the outpainted image by a process including locating the source image on the second portion of the canvas.

In some embodiments the first generative model is a generative adversarial network.

In some embodiments the first generative model generates the condition image with a lower resolution than the image generated by the second generative model. Applying noise to the condition image may include: generating a noise image, wherein the noise image has the same dimensions as the condition image, and replacing a portion of the condition image with the noise image, at least across the first portion.

In some embodiments the latent diffusion model includes a neural network to control the latent diffusion model, wherein the neural network is trained to inpaint images.

In some embodiments generating the image across the first portion of the canvas includes blending the edges of the first portion of the canvas with a second portion of the canvas, different from the first portion.

A computer implemented method for generating an inpainted or outpainted image based on a source image includes: receiving the source image and a user text prompt; creating a mask for the source image, the mask indicating one or more regions for inpainting or outpainting within the source image as foreground for a depth pre-processor; and generating an inpainted or outpainted image across at least the one or more regions indicated as foreground using a generative latent diffusion model with a depth pre-processor and a text to image generator, the depth pre-processor receiving the mask and the text to image generator receiving the source image.

In some embodiments the depth pre-processor and the text to image generator form a multi-controlnet for the latent diffusion model.

In some embodiments dilating the one or more regions for inpainting or outpainting includes applying one or more morphology operations.

In some embodiments creating the modified source image includes applying noise to the first source image. Applying noise to the first source image may include applying noise to the dilated one or more regions for inpainting or outpainting and applying noise to other regions of the source image.

A computer implemented method for generating an inpainted or outpainted image based on a source image includes: receiving the source image, the source image indicating one or more regions for inpainting or outpainting within the source image; receiving a user text prompt; creating a modified source image by a process including dilating the one or more regions for inpainting or outpainting in the source image, to create dilated one or more regions for inpainting or outpainting; creating a mask for the modified source image, the mask indicating the dilated one or more regions for inpainting or outpainting within the modified source image as foreground for a depth pre-processor; and generating an inpainted or outpainted image across at least the one or more regions indicated as foreground using a generative latent diffusion model with a depth pre-processor and a text to image generator, the depth pre-processor receiving the mask and the text to image generator receiving the modified source image.

In some embodiments the depth pre-processor and the text to image generator form a multi-controlnet for the latent diffusion model.

In some embodiments dilating the one or more regions for inpainting or outpainting includes applying one or more morphology operations.

In some embodiments creating the modified source image includes applying noise to the first source image. Applying noise to the first source image may include applying noise to the dilated one or more regions for inpainting or outpainting and applying noise to other regions of the source image.

Data processing systems and non-transient or non-transitory computer-readable storage storing instructions for a data processing system are also described, which are configured to perform the methods disclosed herein.

Further embodiments will become apparent from the following description, given by way of example and with reference to the accompanying drawings.

**Brief description of the drawings**

FIG. 1 shows an example of a computer system, in the form of a client server architecture.

FIG. 2 shows a block diagram of a computer processing system.

FIG. 3 shows a method for generating an image.

FIG. 4 shows a first method for creating a condition image, which may be used in the method of FIG. 3.

FIG. 5 shows a second method for creating a condition image, which may be used in the method of FIG. 3.

FIG. 6 shows an example of latent conditioning of a condition image to produce a latent image and part of a process for image production using latent diffusion, which may be used in the method of FIG. 3.

**Detailed description of the embodiments**

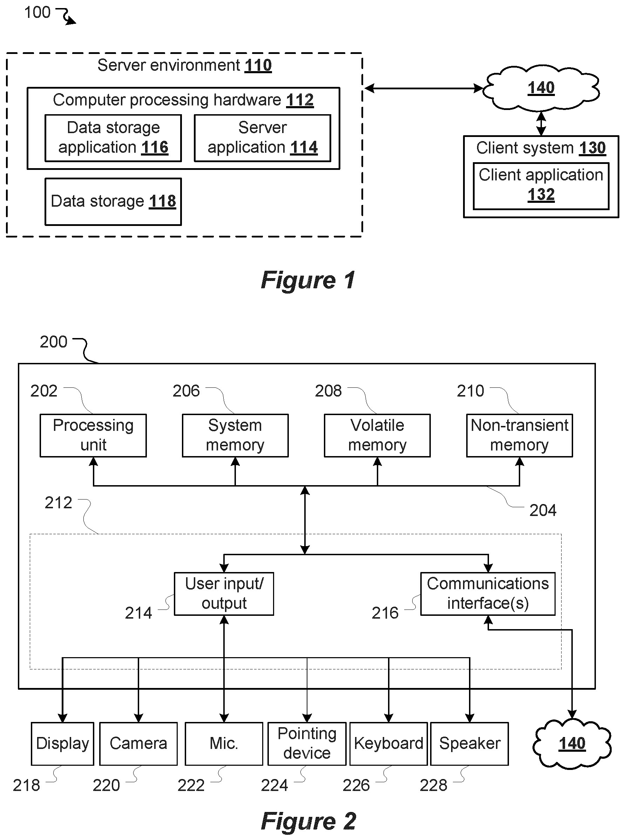

FIG. 1 shows an example of a computer system, in the form of a client server architecture, for image processing tasks. A networked environment 100 includes a first data processing system in the form of a server environment 110 and a second data processing system in the form of a client system 130, which communicate via one or more communications networks 140, for example the Internet.

Generally speaking, the server environment 110 includes computer processing hardware 112 on which one or more applications are executed that provide server-side functionality to client applications. In the present example, the computer processing hardware 112 of the server environment 110 runs a server application 114, which may also be referred to as a front end server application, and a data storage application 116.

The server application 114 operates to provide an endpoint for a client application, for example a client application 132 on the client system 130, which is accessible over communications network 140. To do so, the server application 114 may include one or more application programs, libraries, application programming interfaces (APIs) or other software elements that implement the features and functions that are described herein, including for example to provide image generation by a latent diffusion model. By way of example, where the server application 114 serves web browser client applications, the server application 114 will be a web server which receives and responds to, for example, HTTP application protocol requests. Where the server application 114 serves native client applications, the server application 114 will be an application server configured to receive, process, and respond to API calls from those client applications. The server environment 110 may include both web server and application server applications allowing it to interact with both web and native client applications.

In addition to the specific functionality described herein, the server application 114 (alone or in conjunction with other applications) may provide additional functions that are typically provided by server systems - for example user account creation and management, user authentication, and/or other server side functions.

The data storage application 116 operates to receive and process requests to persistently store and retrieve data in data storage that is relevant to the operations performed/services provided by the server environment 110. Such requests may be received from the server application 114, other server environment applications, and/or in some instances directly from client applications such as the client application 132. Data relevant to the operations performed/-services provided by the server environment may include, for example, user account data, image data and/or other data relevant to the operation of the server application 114. The data storage is provided by one or more data storage devices that are local to or remote from the computer processing hardware 112. The example of FIG. 1 shows data storage 118 in the server environment 110. The data storage 118 may be, for example one or more non-transient or non-transitory computer readable storage devices such as hard disks, solid state drives, tape drives, or alternative computer readable storage devices.

In the server environment 110, the server application 114 persistently stores data to the data storage 118 via the data storage application 116. In alternative implementations, however, the server application 114 may be configured to directly interact with the data storage 118 to store and retrieve data, in which case a separate data storage application may not be needed.

As noted, the server application 114 and data storage application 116 run on (or are executed by) computer processing hardware 112. The computer processing hardware 112 includes one or more computer processing systems. The precise number and nature of those systems will depend on the architecture of the server environment 110.

For example, in one implementation a single server application 114 runs on its own computer processing system and a single data storage application 116 runs on a separate computer processing system. In another implementation, a single server application 114 and a single data storage application 116 run on a common computer processing system. In yet another implementation, the server environment 110 may include multiple server applications running in parallel on one or multiple computer processing systems.

Communication between the applications and computer processing systems of the server environment 110 may be by any appropriate means, for example direct communication or networked communication over one or more local area networks, wide area networks, and/or public networks (with a secure logical overlay, such as a VPN, if required).

The client system 130 hosts the client application 132 which, when executed by the client system 130, configures the client system 130 to provide client-side functionality/interact with server environment 110 or more specifically, the server application 114 and/or other application provided by the server environment 110. Via the client application 132, a user can perform various operations such as receiving image data from another device such as a peripheral or from another computer, causing the displaying of images corresponding to the image data, and sending and receiving image data to and from the server environment.

The client application 132 may be a general web browser application which accesses the server application 114 via an appropriate uniform resource locator (URL) and communicates with the server application 114 via general world-wide-web protocols (e.g. http, https, ftp). Alternatively, the client application 132 may be a native application programmed to communicate with server application 114 using defined API calls.

The client system 130 may be any computer processing system which is configured or is configurable to offer client-side functionality. A client system 130 may be a desktop computer, laptop computers, tablet computing device, mobile/smart phone, or other appropriate computer processing system.

FIG. 2 provides a block diagram of a computer processing system 200 configurable to implement operations described herein. The computer processing system 200 is a general purpose computer processing system. As such a computer processing system in the form shown in FIG. 2 may, for example, form a standalone computer processing system, form all or part of computer processing hardware 112, including data storage 118, or form all or part of the client system 130 (see FIG. 1). Other general purpose computer processing systems may be utilised in the system of FIG. 1 instead.

It will be appreciated that FIG. 2 does not illustrate all functional or physical components of a computer processing system. For example, no power supply or power supply interface has been depicted, however system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

The computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable by (either in a shared or dedicated manner) the computer processing system 200.

Through a communications bus 204 the processing unit 202 is in data communication with one or more machine readable storage (memory) devices which store computer readable instructions and/or data which are executed by the processing unit 202 to control operation of the processing system 200. In this example the computer processing system 200 includes a system memory 206 (e.g. a BIOS), volatile memory 208 (e.g. random access memory such as one or more DRAM modules), and non-transient or non-transitory memory 210 (e.g. one or more hard disk or solid state drives).

The computer processing system 200 also includes one or more interfaces, indicated generally by 212, via which computer processing system 200 interfaces with various devices and/or networks. Generally speaking, other devices may be integral with the computer processing system 200, or may be separate. Where a device is separate from the computer processing system 200, connection between the device and the computer processing system 200 may be via wired or wireless hardware and communication protocols, and may be a direct or an indirect (e.g. networked) connection.

Wired connection with other devices/networks may be by any appropriate standard or proprietary hardware and connectivity protocols. For example, the computer processing system 200 may be configured for wired connection with other devices/communications networks by one or more of: USB; eSATA; Ethernet; HDMI; and/or other wired connections.

Wireless connection with other devices/networks may similarly be by any appropriate standard or proprietary hardware and communications protocols. For example, the computer processing system 200 may be configured for wireless connection with other devices/communications networks using one or more of: BlueTooth; WiFi; near field communications (NFC); Global System for Mobile Communications (GSM), and/or other wireless connections.

Generally speaking, and depending on the particular system in question, devices to which the computer processing system 200 connects - whether by wired or wireless means - include one or more input devices to allow data to be input into/received by the computer processing system 200 and one or more output devices to allow data to be output by the computer processing system 200. Example devices are described below, however it will be appreciated that not all computer processing systems will include all mentioned devices, and that additional and alternative devices to those mentioned may well be used.

For example, the computer processing system 200 may include or connect to one or more input devices by which information/data is input into (received by) the computer processing system 200. Such input devices may include keyboard, mouse, trackpad, microphone, accelerometer, proximity sensor, GPS, and/or other input devices. The computer processing system 200 may also include or connect to one or more output devices controlled by the computer processing system 200 to output information. Such output devices may include devices such as a display (e.g. a LCD, LED, touch screen, or other display device), speaker, vibration module, LEDs/other lights, and/or other output devices. The computer processing system 200 may also include or connect to devices which may act as both input and output devices, for example memory devices (hard drives, solid state drives, disk drives, and/or other memory devices) which the computer processing system 200 can read data from and/or write data to, and touch screen displays which can both display (output) data and receive touch signals (input). The user input and output devices are generally represented in FIG. 2 by user input/output 214.

By way of example, where the computer processing system 200 is the client system 130 it may include a display 218 (which may be a touch screen display), a camera device 220, a microphone device 222 (which may be integrated with the camera device), a pointing device 224 (e.g. a mouse, trackpad, or other pointing device), a keyboard 226, and a speaker device 228.

The computer processing system 200 also includes one or more communications interfaces 216 for communication with a network, such as network 140 of environment 100 (and/or a local network within the server environment 110). Via the communications interface(s) 216, the computer processing system 200 can communicate data to and receive data from networked systems and/or devices.

The computer processing system 200 may be any suitable computer processing system, for example, a server computer system, a desktop computer, a laptop computer, a netbook computer, a tablet computing device, a mobile/smart phone, a personal digital assistant, or an alternative computer processing system.

The computer processing system 200 stores or has access to computer applications (also referred to as software or programs) - i.e. computer readable instructions and data which, when executed by the processing unit 202, configure the computer processing system 200 to receive, process, and output data, or in other words to configure the computer processing system 200 to be data processing system with particular functionality. Instructions and data can be stored on non-transient or non-transitory memory 210. Instructions and data may be transmitted to/received by the computer processing system 200 via a data signal in a transmission channel enabled (for example) by a wired or wireless network connection over an interface, such as communications interface 216.

Typically, one application accessible to the computer processing system 200 will be an operating system application. In addition, the computer processing system 200 will store or have access to applications which, when executed by the processing unit 202, configure system 200 to perform various computer-implemented processing operations described herein. For example, and referring to the networked environment of FIG. 1 above, server environment 110 includes one or more systems which run a server application 114, a data storage application 116. Similarly, client system 130 runs a client application 132.

In some cases part or all of a given computer-implemented method will be performed by the computer processing system 200 itself, while in other cases processing may be performed by other devices in data communication with the computer processing system 200.

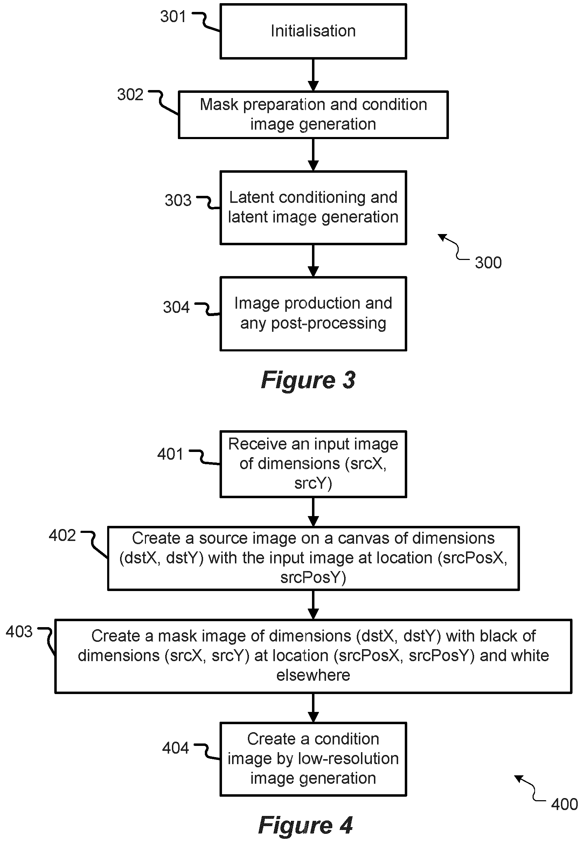

FIGs 3 to 6 depict methods that may be performed by a data processing system. The arrangement of steps in these figures is not intended to limit the disclosure to only the order of steps shown, or intended to limit the disclosure to only serial processing for any steps.

FIG. 3 shows an embodiment of a method 300, performed by a data processing system. The operations of the method 300 may be performed, for example, by an instance of the computer processing system 200.

The method 300 is a method for generating an image. The method is described with reference to use of the latent diffusion model Stable Diffusion v1.5 and to the use of ControlNet 1.1 as a neural network to control Stable Diffusion to support additional input conditions, available from Stability AI Ltd. It will be understood that other latent diffusion models and other control networks for the latent diffusion models may be used.

In step 301 an initialisation process is performed. The initialisation process includes applying a configuration, which may be stored as a persistent dictionary. The configuration includes a selection of the models for use in image generation. In one embodiment the models include at least one of a general Stable Diffusion model, for example Stable Diffusion v1.5 and a Stable Diffusion model trained for inpainting, for example the v1.5 inpainting model, and one or more instances of the ControlNet model for controlling each Stable Diffusion model. One instance of ControlNet model is a depth pre-processor for conditioning an output image with depth information using a reference image, for example the ControlNet with model identifier Depth. Another ControlNet model is conditioned on localised image edits, for example the ControlNet with the model identifier Inpaint. A further ControlNet model is an instruction-based image editing model, for example the ControlNet with the model identifier InstructPix2Pix. In one embodiment all three of these instances of ControlNet model are utilised, each for different functions. In other embodiments one or two of these three instances are utilised, particularly where one or more of the three functions is not required. In still other embodiments one or more further ControlNet models are utilised, for example a model conditioned to be an edge detector, which may be a Canny edge detector, to impart further functionality to the data processing system.

As described below two or more control inputs are provided to the diffusion model for a single image generation. In some embodiments, two or more ControlNets may be combined by modifying a weighting of the ControlNets into the diffusion process. This weighting may be a system variable and may be set by experimentation - running the diffusion process with different weightings and selecting the weighting that achieves images that are or are closest to a desired result for the particular application. The two or more ControlNets form a multi-controlnet.

As described herein below, whilst a plurality of models may be made available at initialisation, a subset of those models may be utilised for a particular image generation process. In some embodiments a plurality of image generation processes are made available by the data processing system, which utilise different models together with a latent diffusion model to achieve image generation. However the present disclosure also extends to implementations in which only a single image generation process is made available by the data processing system.

The initialisation process also includes setting parameters for Stable Diffusion. One parameter is the number of inference steps, which for example may be set to 50. Another is the guidance scale, which for is set low (e.g. 4) for outpainting and high (e.g. 12) for inpainting. The processes of outpainting and inpainting are described later herein. The initialisation process also includes nominating a scheduler. The nominated scheduler may be one that is numerically stable, or in other words has a low temperature, causing Stable Diffusion to take smaller steps when generating an image.

The initialisation process may also include setting the use of and identifying one or more system qualifiers for a text prompt received from the user. In some embodiments, the system qualifiers may be a predetermined set of one or more words that are added or appended to the text prompt.

The system qualifiers may include one or more negative text prompts. The one or more negative text prompts direct the Stable Diffusion process away from the generation of undesirable images, for example for safety and quality purposes. Example negative text prompts are "bad anatomy", "blurry" and "low quality". The system qualifiers may include one or more positive text prompts. These may direct the Stable Diffusion process towards the generation of desirable images, for example to achieve a particular style of image, such as photo realistic images or to the contrary more abstract images. The qualifiers may be predetermined words added to one or both of the beginning or end of the user's text prompt. For example, considering the text prompt "cactus", the text prompt may be modified by appending "Sharp realistic" to form "Sharp realistic cactus".

In some embodiments there is a plurality of sets of one or more system qualifiers available and the set utilised may be based on an input, for example a user input. The user input may be received responsive to a selection from two or more different styles. For example a user may be given a choice between a style of "realistic", selection of which might cause "sharp realistic" to be appended to the text prompt and a style of "abstract", selection of which results in a different set of one or more appended words, such as "abstract".

In some embodiments the initialisation process also includes making available a different inpainting model configured to generate an image that is usable as the basis for a "hint" into the diffusion generation process of Stable Diffusion. Use of such an image is described herein below. In some embodiments the image has noise added to it before being utilised. In some embodiments the image is a low resolution image. In some embodiments the image is generated by a generative adversarial network (GAN), for example large mask inpainting (LaMa), as described in Survorov et al., "Resolutionrobust Large Mask Inpainting with Fourier Convolutions", Winter Conference on Applications of Computer Vision (WACV 2022), arXiv:2109.07161. A low resolution image may be for example a half of the resolution of the output image, or less than half of the resolution of the output image, or a quarter of the resolution of the output image, or less than a quarter of the resolution of the output image.

In step 302 a mask preparation and image generation process is performed. The image generated is called herein a "condition image". The prepared mask is used for the condition image generation. For example, a mask may indicate areas of an image to preserve as black and indicate areas for condition image generation as white. In other words, the condition image generation is outpainting or inpainting an image over the white indicated areas and preserving the black indicated areas of the image. This example use of black and white is adopted in the following description. It will be appreciated that this use of black and white for a mask may be used as a convention, but that other indicators may be used to delineate areas to preserve and areas for condition image generation (and for consequent image generation by latent diffusion).

The mask preparation process differs depending on whether the image generation is outpainting or inpainting. Accordingly, the mask preparation process may be based on a determination of a request as being a request for outpainting or as being a request for inpainting.

FIG. 4 shows an embodiment of a method 400, performed by a data processing system, for example the computer processing system 200. The method 400 is an example method for mask preparation and condition image generation for outpainting by latent diffusion and may correspond to step 302 of FIG. 3.

In step 401 an input image is received. The input image has dimensions, including a horizontal or x-axis dimension denoted "srcX" in FIG. 4 and a vertical or y-axis dimension denoted "srcY" in FIG. 4. The input image is the image for which or in relation to which outpainting is to be performed.

The input image received in step 401 may be either created by the data processing system, or be an existing image that is received by the data processing system. In both cases the image is received by the data processing system, in the sense that it is received for the purpose of performing the method 400.

For outpainting beyond one or more of the edges of the input image, the generated image necessarily extends beyond those edges. The combined area of the input image and the areas for outpainting is called herein a "canvas". In step 402 an image called herein a "source image" is created on such a canvas. The canvas has a horizontal or x-axis dimension denoted "dstX" in FIG. 4 and a vertical or y-axis dimension denoted "dstY" in FIG. 4. Absent any additional processes for cropping embedded into the method (any required cropping of an image may be performed an antecedent step to step 401), both dstX and dstY are at least equal to srcX and srcY respectively and at least one of dstX and dstY is greater than srcX and srcY respectively. The size of the canvas may be determined based on a selection by a user. The user may specify the dimensions precisely, for example by specifying a number of pixels, or may select from one or more options of combinations of dstX and dstY, which might be specified in pixels and/or in another measure.

The input image is located on the created canvas. The location is denoted in FIG. 4 as srcPosX, srcPosY to refer to the horizontal and vertical positions within the canvas. For example srcPosX, srcPosY may refer to the location of the top left corner of the input image on the canvas. The location may be determined based on a received input from a user. The allowable locations may be constrained, for example to ensure the entirety of the input image is located within the canvas.

Alternatively step 402 may involve cropping the input image along the edges of the canvas if the location selected by the user results in part of the input image extending beyond the canvas. The user may be informed of or warned of this cropping process by a prompt, for example a dialog box.

At step 403 a mask image is created. The mask image has the same overall dimensions as the canvas (dstX, dstY). The mask image is black in the area corresponding to the location of the input image on the canvas and white in other areas. In other words, the mask image is white apart from an area of black of dimensions (srcX, srcY) at location (srcPosX, srcPosY).

At step 404 a condition image is generated based on the source image and the mask image. The condition image is generated by applying an outpainting model to the source image, to generate images in the areas of the source image that correspond to the white areas of the mask. The outpainting model is at least one of: a different model to the latent diffusion model; a different model type to the latent diffusion model; configured to generate a lower resolution image than the latent diffusion model.

In some embodiments the outpainting model for generating the condition image is a GAN. In some embodiments the outpainting model for generating the condition image is a model conditioned for inpainting, but applied to outpainting. In some embodiments the outpainting model for generating the condition image operates without a text prompt. For example the outpainting model for generating the condition image may be the previously mentioned LaMa model.

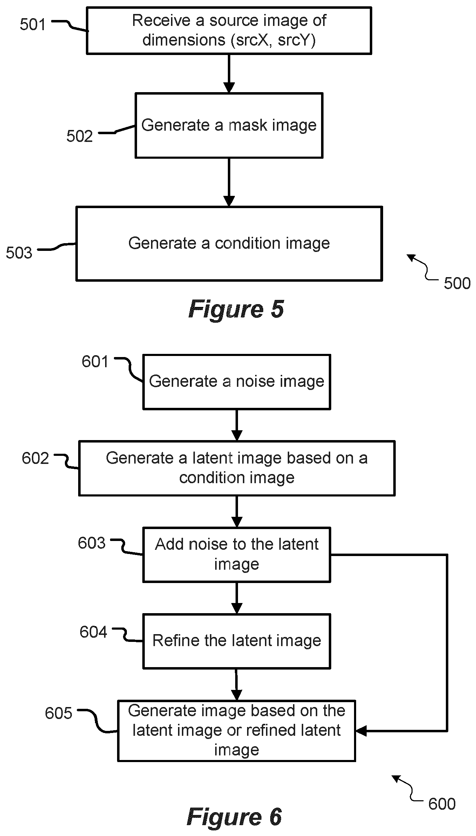

FIG. 5 shows an embodiment of a method 500, performed by a data processing system, for example the computer processing system 200. The method 500 is an example method for mask preparation and condition image generation for inpainting by latent diffusion and may correspond to step 302 of FIG. 3.

In step 501 a source image is received. The source image has dimensions, including a horizontal or x-axis dimension denoted "srcX" in FIG. 5 and a vertical or y-axis dimension denoted "srcY" in FIG. 5. The source image is the image for which or in relation to which inpainting is to be performed. In some embodiments the source image has been created by the data processing system responsive to user input. In other embodiments the source image is received by the data processing system, for example from another data processing system over a communication network. For example, a user input may have entered text and a font and the data processing system created an image file showing the entered text in the selected font. In another example a user input may be selected one or more shapes and placed those shape(s) onto a page of a document, with the data processing system creating an image file based on that page.

In some embodiments the source image is text or one or more shapes, where the background is white and the text or one or more shapes is black. The text or the one or more shapes indicates an area to be inpainted. For example, a black and white source image may created through rasterization of the text or shape(s).

At step 502 a mask image is generated. The mask image is created by dilating the white text or one or more shapes of the source image, which may be achieved using image morphology operations and inverting the source image, so that the one or more shapes are white on a black background. As described herein below, the mask image is used to indicate depth information in the image, with the white indicating foreground and the black indicating background.

At step 503 a condition image is generated. The condition image is generated by dilating the black text or one or more shapes of the source image, which may be achieved using image morphology operations. As described herein below, the condition image is used for controlling the inpainting. In some embodiments the condition image serves as basis for creating a latent image with added noise, which in turn controls the inpainting. In other embodiments the addition of noise is omitted, in which case the condition image is the latent image (i.e. step 303 of method 300 may be omitted, with step 302 in effect being mask preparation and latent image generation).

In other embodiments the dilating step is omitted from both the mask image and condition image generation. In this case the condition image may be the source image, so no separate generation step is required.

In embodiments in which the source image is not black text or shapes on a white background, then the steps above may be modified accordingly. In particular, for the example where the black and white regions of the source image are reversed, the condition image is created by inverting the source image and creating the mask image will not require an inverting step.

Alternatively, where the source image is (or is modified to be) white text or shapes on a black background, then the method 500 may be utilised to inpaint the source image in areas surrounding the text or shapes. In that case the mask indicates that the text or shapes are background and the rest of the source image is foreground. It will be appreciated that this is effectively creating an outpainted image based on a text prompt.

In some embodiments a single source image is divided into a plurality of source images. The method 500 is then performed for each of the plurality of source images. The resulting inpainting images may be combined into one, for example as part of the post-processing of step 304 of the method 300. To illustrate, where the source image is a bar chart, an individual bar may be identified as a foreground object by being rendered in white for the mask image. This mask image may then be used to generate the condition image, which may be inverse of the mask image. The image may then be produced based on the mask and latent image (which as described herein may be the condition image or a modified condition with noise). This process may be repeated for each bar and the images produced for each bar combined into a single image. The identification of parts of image to perform inpainting may be by the data processing system without user input directly identifying the parts or may be based on user input that selects the individual parts.

The condition image generated by method 400 or method 500 is used as a basis for a hint to latent diffusion, as described in more detail herein below. The condition image (e.g. generated by the method 500) for inpainting by latent diffusion differs from the condition image (e.g. generated by the method 400) for outpainting by latent diffusion.

The data processing system may implement the method 400 or the method 500 to generate a mask and a condition image. Which method is applied depends on whether the method 300 is used for inpainting or outpainting. In some embodiments the data processing system is configured to perform both outpainting and inpainting. In some embodiments the data processing system is configured to perform only one of outpainting and inpainting and not the other.

Returning to FIG. 3, in step 303 the condition image may be utilised in a process called herein "latent conditioning" to produce an image called herein a "latent image". The condition image is processed using the Variational Autoencoder (VAE) component of the latent diffusion model to convert it to a latent image which can be used to initialise the latent diffusion process. As mentioned, the condition image is generated to provide a basis for a visual hint to latent diffusion as to what image to generate. However, if the condition image resulting from method 400 or method 500 is used as the hint, there is a tendency towards the generated image from latent diffusion resembling the hint too closely. To loosen this association, latent conditioning is used, which adds noise to the condition image, which adds randomness. This randomness in the latent image also adds randomness to the inpainting or outpainting.

In step 304 the latent image from step 303 is used as a hint for image generation by a latent diffusion model. The latent image is passed to the latent diffusion pipeline of the latent diffusion model as an argument to inference. An example of these processes of steps 303 and 304 is described herein below with reference to FIG. 6.

In some embodiments when outpainting is to be performed, an inpainting control network is used together with the latent diffusion model. The inpainting control network is used without a user text prompt. One or more text prompts that are system qualifiers may be used. Instead of using a user text prompt, the diffusion draws context from the already filled regions, from the "hint" provided by the latent image and optionally with the system qualifiers. By way of example, for outpainting Stable Diffusion may be used with the previously mentioned ControlNet model "Inpaint". By way of example, for outpainting Stable Diffusion may be used with the multi-controlnet.

In some embodiments when inpainting is to be performed, a multi-controlnet as described herein above is used in addition to the latent diffusion model, which may be the same latent diffusion model as that used for outpainting or a different latent diffusion model. By way of example of a different (but related) model, for inpainting Stable Diffusion for inpainting may be used with the multi-controlnet. The multi-controlnet receives the inpainting mask and associated depth information. The latent diffusion model receives the user text prompt, together with any system qualifiers and the latent image.

In some embodiments one aspect of the multi-controlnet is a depth controlnet, one that is configured to indicate that white is foreground and black is background. For example the Depth ControlNet may be a part of the multi-controlnet. The Depth ControlNet receives the mask. For example, the source image may be of the words "Lorem Ipsum" in white font, in which case the Depth ControlNet may identify the outline of the words. It will be appreciated that in other embodiments the colours indicating foreground and background could be reversed or other colours used to indicate foreground and background, with the input image being adjusted accordingly. The Depth ControlNet generates a perceived depth of the image.

In some embodiments, another aspect of the multi-controlnet is the aforementioned InstructPix2Pix ControlNet, which may be used together with the depth controlnet. The InstructPix2Pix ControlNet also receives the text prompt, with any system qualifiers. The InstructPix2Pix ControlNet is used to interpret the text prompt into instructions on how the source image should be modified.

In some embodiments, another aspect of the multi-controlnet is the previously mentioned ControlNet model "Inpaint". The Inpaint ControlNet may be used in addition to or instead of the InstructPix2Pix ControlNet. The Inpaint ControlNet also receives the user text prompt, with any system qualifiers.

In some embodiments, another aspect of the mutli-controlnet is an edge detector control network. By way of example, the previously mentioned ControlNet model "Canny" may be used. In some embodiments Canny is used with the Depth ControlNet only. In other embodiments Canny is used together with or instead of the Depth Controlnet and one or both of InstructPix2Pix and Inpaint.

For inpainting the resulting image from the image production of step 304 is "drawn over the lines" of the source image, due in part to the image morphology or dilation operations.

The user text prompt may be a user input or a user selection. For example a user may enter or select the word "cactus" or provide an image of a cactus for use as a positive text or text prompt, with an intention that the area(s) to be inpainted are filled with images related to cacti. The user text prompt may be in the form of one or more sentences that describe a desired style output. Another example of a positive text prompt is "a detailed high quality photo of vegetables", with an intention that the area(s) to be inpainted are filled with images of vegetables, with the images having characteristics of being detailed, high quality and photo-realistic. In some cases, the user text prompt also specifies one or both of the content of the latent image and characteristics of the background, which may guide the latent diffusion process to generate a plain coloured background, for example "An image showing the words 'Lorem Ipsum' in vegetables", "An image showing vegetables on a white background" or "An image showing the words 'Lorem Ipsum' in vegetables on a white background". In some other cases, the style prompt may include a combination of one or sentences and one or more words.

When the user text prompt does not specify the background, the generated image may include images across both the foreground and the background. For example a user text input "Shag pile rug" may show the text as if it were a pattern on a shag pile rug. This may be retained as the image output. In another example, the user text input "cactus" may show cacti in both the foreground and the background. The background images may be either retained or removed by a background remover. The Depth ControlNet interoperates with the background remover to enable the background to be effectively removed.

In some embodiments the data processing system provides guidance to the user to input the text prompt. For example, the request UI may pose questions to the user to elicit responses - e.g., it may ask the user how the user wishes to stylize the text or object and may in some cases also provide a drop-down menu of style options to help the user decide. In addition, the request UI may pose questions to obtain more information regarding the stylization. For example, it may request answers for questions like, "how would you like the background to be stylized", "would you like the stylization to be any particular colours?", etc. The user's responses to the questions can then be concatenated into a single sentence or a string of words to create the user text prompt.

For outpainting, the output image from the diffusion pipeline does not include the input image. The post-processing of step 304 therefore includes combining the input image with the output image. For example the input image may be combined with the output image by being pasted on top of the output image. In some embodiments the edges of one or both of the input image and the output image are slightly blurred in a blurring operation before being combined or are otherwise blended to help avoid the appearance of any discontinuity.

For inpainting the output image from the diffusion pipeline has a plain coloured background. The post-processing of step 304 therefore optionally includes running the output image through a colour-keyed or neural-net based background remover to make it an image with a transparent background.

The user's responses may also control the post-processing of the image. For example, the running of a background remover may be responsive to a user's response to a query or other input. Another example of post-processing, which may be applied in response to user input or in all cases is an upscaling process applying an upscaler to the output of the diffusion pipeline, or using a variant of pyramidal upscaling to gradually increase the resolution of the generated image during inference steps.

FIG. 6 shows an embodiment of a method 600, performed by a data processing system. The operations of the method 600 may be performed, for example, by an instance of the computer processing system 200.

The method 600 is an example of latent conditioning of a condition image to produce a latent image (e.g. an example of step 303 of the method 300) and part of the process for image production using latent diffusion (e.g. an example of the image production aspect of step 304 of the method 300).

In step 601 a noise image is generated for input into the latent diffusion model. The noise image may be generated in the same way as per standard latent diffusion models and have dimensions that match the diffusion process requirements.

In step 602 a variational auto-encoder (VAE) in the diffusion pipeline of the latent diffusion model converts the condition image into a latent image. In step 603 a noise scheduler in the diffusion pipeline adds noise to the latent image. As described previously, this adds randomness to the process, preventing over-conditioning and preserving randomness in the stable diffusion outpainting or inpainting. The proportion of noise in the latent image may be fixed or may be a variable, settable by a user or administrative user. In the case of being fixed, the fixed proportion may be different between inpainting and outpainting, or may be the same. The proportion of noise is non-zero and is less than 100%. More preferably the proportion of noise is between 10% and 90%, or between 20% and 80%, or between 30% and 70%. In some embodiments the proportion of noise for outpainting is higher than the proportion of noise for inpainting. In the case of outpainting, the method 600 proceeds to step 605 and an image with outpainting on the canvas is generated, for combination with the input image. In the case of inpainting, the method proceeds to step 604.

In step 604 the latent image is refined for inpainting. The refined latent image includes the condition image with added noise in the inpainting area. Taking the example of black in the condition image indicating the areas for inpainting and white used for background, the noise is added to each area in black. In the white or background areas, the latent image (including added noise as per step 603) is present, in part.

In some embodiments this refinement is through application of the mask image to retain noise in the area(s) to be inpainted and mask out noise from the other areas. In other words, the application of the mask leaves noise in the areas of the image occupied by the dilated text or shape(s) and removes noise in the other areas of the image. In other embodiments there is further refinement by summing the masked noise image with two further terms. In algorithm form, the three terms to be summed may be represented as:

a)

$$noise*(1.0 - (mask\ image));$$

b)

$$mask*(blendGamma*latent\ Image + (1-blendGamma)*noise)$$

where blendGamma is the percentage amount that the latent image gets mixed into the noise areas in the regions defined by the mask. As seen in equation term b, if blendGamma is set to 0, the regions defined by the mask would be the noise, and at the value 1, regions defined by the mask would be the latent image.

Following step 604, the inpainting image is generated based on the refined latent image (step 605). The generating includes, for the number of inference steps during latent diffusion from the noise image, converting the noise in the refined latent image to a desired result determined by the Stable Diffusion model. At each inference step, the image from the subsequent step, is passed through the multi-controlnet, which determines the desired result at each step.

Throughout the specification, unless the context clearly requires otherwise, the terms "first", "second" and "third" are intended are intended to refer to individual instances of an item referred to and are not intended to require any specific ordering, in time or space or otherwise.

The invention is defined by the appended claims.

**Claims**

1. A computer implemented method for generating an image, the method including:

   generating a condition image from an input or source image, the condition image including at least one first portion for image generation, wherein the first portion is less than all of the condition image;
   generating a latent image from the condition image, wherein generating the latent image includes applying noise to the condition image across the at least one first portion and wherein the latent image includes at least one second portion to which noise is not applied; and
   generating an image using a latent diffusion model, wherein the latent image is passed to a latent diffusion pipeline of the latent diffusion model as an argument to inference,
   wherein the latent diffusion model includes a neural network to control the latent diffusion model, the neural network structure estimating depth information based on a mask that identifies said at least one first portion as foreground.

2. The method of claim 1, wherein applying noise to the condition image includes:

   generating a noise image, wherein the noise image has the same dimensions as the condition image, and replacing a portion of the condition image with the noise image, at least across at least one first portion.

3. The method of claim 2 wherein said at least one first portion is an area for outpainting of the input or source image and a second portion of the condition image corresponds to the input or source image, and wherein the method further includes overlaying the input or source image over the image generated using the latent diffusion model at a location corresponding to a said second portion.

4. The method of any one of claims 1 to 3, wherein applying noise to the condition image across the at least one first portion comprises adding noise by a noise scheduler in the diffusion pipeline.

5. The method of any one of claims 1 to 4, wherein generating the latent image includes applying a mask, wherein the mask retains noise in at least the at least one first portion and removes noise from at least the at least one second portion.

6. The method of any one of claims 1 to 5, wherein the proportion of the noise is between 10% and 90%.

7. The method of any one of claims 1 to 5, wherein the proportion of the noise is between 20% and 80%.

8. The method of any one of claims 1 to 5, wherein the proportion of the noise is between 30% and 70%.

9. The method of any one of claims 1 to 8, wherein the input or source image is an image of text or one or more shapes, the condition image is an image in which the text or one or more shapes have been dilated, the dilated text or one or more shapes forming the at least one first portion for image generation.

10. The method of claim 9 when dependent on claim 5, wherein the mask has a shape corresponding to the dilated text or one or more shapes and retains noise in an interior of the dilated text or one or more shapes and removes noise outside of the text or one or more shapes, wherein the at least one second portion is the area(s) outside of the text or one or more shapes.

11. The method of claim 9 or claim 10, further comprising applying a background remover to the one or at least one second portion.

12. The method of any one of claims 1 to 8, wherein the condition image is an image generated by an outpainting model that is different to the latent diffusion model, the outpainting model generating the condition image by outpainting the source or input image in at least one direction.

13. The method of claim 12, wherein the outpainting model is configured to generate a lower resolution image than the latent diffusion model.

14. The method of claim 12 or claim 13, wherein the outpainting model is a generative adversarial network.

15. A data processing system comprising one or more computer processors and computer-readable storage, the data processing system configured to perform the method of any one of claims 1-14.


**Patentansprüche**

1. Computerimplementiertes Verfahren zum Erzeugen eines Bildes, wobei das Verfahren Folgendes enthält:

   Erzeugen eines Bedingungsbildes aus einem Eingabe- oder Quellbild, wobei das Bedingungsbild mindestens einen ersten Abschnitt zur Bilderzeugung enthält, wobei der erste Abschnitt kleiner als das gesamte Bedingungsbild ist;
   Erzeugen eines latenten Bildes aus dem Bedingungsbild, wobei das Erzeugen des latenten Bildes Anwenden von Rauschen auf das Bedingungsbild über den mindestens einen ersten Abschnitt enthält und wobei das latente Bild mindestens einen zweiten Abschnitt enthält, auf den kein Rauschen angewendet wird; und
   Erzeugen eines Bildes unter Verwendung eines latenten Diffusionsmodells, wobei das latente Bild als ein Argument für die Inferenz an eine latente Diffusionspipeline des latenten Diffusionsmodells weitergeleitet wird, wobei das latente Diffusionsmodell ein neuronales Netz enthält, um das latente Diffusionsmodell zu steuern, wobei die neuronale Netzstruktur Tiefeninformationen auf Grundlage einer Maske schätzt, die den mindestens einen ersten Abschnitt als Vordergrund identifiziert.

2. Verfahren nach Anspruch 1, wobei das Anwenden von Rauschen auf das Bedingungsbild Folgendes enthält:

   Erzeugen eines Rauschbildes, wobei das Rauschbild die gleichen Dimensionen wie das Bedingungsbild aufweist, und
   Ersetzen eines Abschnitts des Bedingungsbildes durch das Rauschbild, mindestens über mindestens einen ersten Abschnitt.

3. Verfahren nach Anspruch 2, wobei der mindestens eine erste Abschnitt ein Bereich zum Outpainting des Eingabe- oder Quellbildes ist und ein zweiter Abschnitt des Bedingungsbildes dem Eingabe- oder Quellbild entspricht und wobei das Verfahren ferner Überlagern des Eingabe- oder Quellbildes über das unter Verwendung des latenten Diffusionsmodells erzeugte Bild an einer Stelle, die dem zweiten Abschnitt entspricht, enthält.

4. Verfahren nach einem der Ansprüche 1 bis 3, wobei das Anwenden von Rauschen auf das Bedingungsbild über den mindestens einen ersten Abschnitt Hinzufügen von Rauschen durch einen Rausch-Scheduler in der Diffusionspipeline umfasst.

**5.** Verfahren nach einem der Ansprüche 1 bis 4, wobei das Erzeugen des latenten Bildes Anwenden einer Maske enthält, wobei die Maske Rauschen in mindestens dem mindestens einen ersten Abschnitt beibehält und Rauschen von mindestens dem mindestens einen zweiten Abschnitt entfernt.

**6.** Verfahren nach einem der Ansprüche 1 bis 5, wobei der Anteil des Rauschens zwischen 10 % und 90 % liegt.

**7.** Verfahren nach einem der Ansprüche 1 bis 5, wobei der Anteil des Rauschens zwischen 20 % und 80 % liegt.

**8.** Verfahren nach einem der Ansprüche 1 bis 5, wobei der Anteil des Rauschens zwischen 30 % und 70 % liegt.

**9.** Verfahren nach einem der Ansprüche 1 bis 8, wobei das Eingabe- oder Quellbild ein Bild von Text oder einer oder mehreren Formen ist, das Bedingungsbild ein Bild ist, in dem der Text oder die eine oder mehreren Formen dilatiert wurden, wobei der dilatierte Text oder die eine oder mehreren dilatierten Formen den mindestens einen ersten Abschnitt zur Bilderzeugung ausbilden.

**10.** Verfahren nach Anspruch 9, wenn abhängig von Anspruch 5, wobei die Maske eine Form aufweist, die dem dilatierten Text oder der einen oder den mehreren dilatierten Formen entspricht, und Rauschen in einem Inneren des dilatierten Textes oder der einen oder mehreren dilatierten Formen beibehält und Rauschen außerhalb des Textes oder der einen oder mehreren Formen entfernt, wobei der mindestens eine zweite Abschnitt der/die Bereich(e) außerhalb des Textes oder der einen oder mehreren Formen ist.

**11.** Verfahren nach Anspruch 9 oder Anspruch 10, ferner umfassend Anwenden eines Hintergrundentferners auf den einen oder mindestens einen zweiten Abschnitt.

**12.** Verfahren nach einem der Ansprüche 1 bis 8, wobei das Bedingungsbild ein Bild ist, das durch ein Outpainting-Modell erzeugt wird, das sich von dem latenten Diffusionsmodell unterscheidet, wobei das Outpainting-Modell das Bedingungsbild durch Outpainting des Quell- oder Eingabebilds in mindestens einer Richtung erzeugt.

**13.** Verfahren nach Anspruch 12, wobei das Outpainting-Modell dazu konfiguriert ist, ein Bild mit einer niedrigeren Auflösung als das latente Diffusionsmodell zu erzeugen.

**14.** Verfahren nach Anspruch 12 oder Anspruch 13, wobei das Outpainting-Modell ein Generative Adversarial Network ist.

**15.** Datenverarbeitungssystem, umfassend einen oder mehrere Computerprozessoren und computerlesbaren Speicher, wobei das Datenverarbeitungssystem dazu konfiguriert ist, das Verfahren nach einem der Ansprüche 1 - 14 durchzuführen.

**Revendications**

**1.** Procédé mis en œuvre par ordinateur pour générer une image, le procédé comprenant :

la génération d'une image de condition à partir d'une image d'entrée ou source, l'image de condition comprenant au moins une première partie pour la génération d'image, dans lequel la première partie est inférieure à la totalité de l'image de condition ;
la génération d'une image latente à partir de l'image de condition, dans lequel la génération de l'image latente comprend l'application de bruit à l'image de condition à travers l'au moins une première partie et dans lequel l'image latente comprend au moins une deuxième partie à laquelle le bruit n'est pas appliqué ; et
la génération d'une image à l'aide d'un modèle de diffusion latente, dans lequel l'image latente est transmise à un pipeline de diffusion latente du modèle de diffusion latente en tant qu'argument d'inférence,
dans lequel le modèle de diffusion latente comprend un réseau neuronal pour contrôler le modèle de diffusion latente, la structure de réseau neuronal estimant les informations de profondeur sur la base d'un masque qui identifie ladite au moins une première partie en tant que premier plan.

**2.** Procédé selon la revendication 1, dans lequel l'application de bruit à l'image de condition comprend :

la génération d'une image de bruit, dans lequel l'image de bruit a les mêmes dimensions que l'image de condition, et

le remplacement d'une partie de l'image de condition par l'image de bruit, au moins à travers au moins une première partie.

3. Procédé selon la revendication 2, dans lequel ladite au moins une première partie est une zone destinée à l'extension d'image (outpainting) de l'image d'entrée ou source et une deuxième partie de l'image de condition correspond à l'image d'entrée ou source, et dans lequel le procédé comprend en outre la superposition de l'image d'entrée ou source sur l'image générée à l'aide du modèle de diffusion latente à un emplacement correspondant à ladite deuxième partie.

4. Procédé selon l'une quelconque des revendications 1 à 3, dans lequel l'application de bruit à l'image de condition à travers l'au moins une première partie comprend l'ajout de bruit par un programmateur de bruit dans le pipeline de diffusion.

5. Procédé selon l'une quelconque des revendications 1 à 4, dans lequel la génération de l'image latente comprend l'application d'un masque, dans lequel le masque retient le bruit dans au moins l'au moins une première partie et élimine le bruit d'au moins l'au moins une deuxième partie.

6. Procédé selon l'une quelconque des revendications 1 à 5, dans lequel la proportion du bruit est comprise entre 10 % et 90 %.

7. Procédé selon l'une quelconque des revendications 1 à 5, dans lequel la proportion du bruit est comprise entre 20 % et 80 %.

8. Procédé selon l'une quelconque des revendications 1 à 5, dans lequel la proportion du bruit est comprise entre 30 % et 70 %.

9. Procédé selon l'une quelconque des revendications 1 à 8, dans lequel l'image d'entrée ou source est une image de texte ou une ou plusieurs formes, l'image de condition est une image dans laquelle le texte ou une ou plusieurs formes ont été dilatés, le texte dilaté ou une ou plusieurs formes formant l'au moins une première partie pour la génération d'image.

10. Procédé selon la revendication 9 lorsqu'elle dépend de la revendication 5, dans lequel le masque a une forme correspondant au texte dilaté ou à une ou plusieurs formes et retient le bruit à l'intérieur du texte dilaté ou d'une ou plusieurs formes et élimine le bruit à l'extérieur du texte ou d'une ou plusieurs formes, dans lequel l'au moins une deuxième partie est la ou les zones à l'extérieur du texte ou d'une ou plusieurs formes.

11. Procédé selon la revendication 9 ou la revendication 10, comprenant en outre l'application d'un éliminateur d'arrière-plan à l'une ou l'au moins une deuxième partie.

12. Procédé selon l'une quelconque des revendications 1 à 8, dans lequel l'image de condition est une image générée par un modèle d'outpainting qui est différent du modèle de diffusion latente, le modèle d'outpainting générant l'image de condition par outpainting de l'image source ou d'entrée dans au moins une direction.

13. Procédé selon la revendication 12, dans lequel le modèle d'outpainting est configuré pour générer une image de résolution inférieure à celle du modèle de diffusion latente.

14. Procédé selon la revendication 12 ou la revendication 13, dans lequel le modèle d'outpainting est un réseau contradictoire génératif.

15. Système de traitement de données comprenant un ou plusieurs processeurs informatiques et un stockage lisible par ordinateur, le système de traitement de données étant configuré pour exécuter le procédé selon l'une quelconque des revendications 1 à 14.

100

Server environment **110**

Computer processing hardware **112**

Data storage application **116**

Server application **114**

Data storage **118**

**140**

Client system **130**

Client application **132**

## Figure 1

200

202 Processing unit

206 System memory

208 Volatile memory

210 Non-transient memory

204

212

214 User input/ output

216 Communications interface(s)

218 Display  220 Camera  222 Mic.  224 Pointing device  226 Keyboard  228 Speaker

**140**

## Figure 2

301 — Initialisation

302 — Mask preparation and condition image generation

303 — Latent conditioning and latent image generation

— 300

304 — Image production and any post-processing

## Figure 3

401 — Receive an input image of dimensions (srcX, srcY)

402 — Create a source image on a canvas of dimensions (dstX, dstY) with the input image at location (srcPosX, srcPosY)

403 — Create a mask image of dimensions (dstX, dstY) with black of dimensions (srcX, srcY) at location (srcPosX, srcPosY) and white elsewhere

404 — Create a condition image by low-resolution image generation

— 400

## Figure 4

501 — Receive a source image of dimensions (srcX, srcY)

502 — Generate a mask image

503 — Generate a condition image

500

**Figure 5**

601 — Generate a noise image

602 — Generate a latent image based on a condition image

603 — Add noise to the latent image

604 — Refine the latent image

605 — Generate image based on the latent image or refined latent image

600

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAO LIU**. *DIFFDUB: Person-generic visual dubbing using inpainting renderer with diffusion auto-encoder*
- **SHAOAN XIE**. *SmartBrush: Text and Shape Guided Object Inpainting with Diffusion Model*
- **TIANHAO WU**. *IPO-LDM: Depth-aided 360-degree Indoor RGB Panorama Outpainting via Latent Diffusion Model*
- **CAN QIN**. *UniControl: A Unified Diffusion Model for Controllable Visual Generation In the Wild*
- **SURVOROV et al.** Resolutionrobust Large Mask Inpainting with Fourier Convolutions. *Winter Conference on Applications of Computer Vision (WACV 2022), arXiv:2109.07161*